# EUROPEAN PATENT SPECIFICATION

(11) **EP 2 801 414 B1**
(45) Date of publication and mention of the grant of the patent: **03.04.2019**
(21) Application number: 14172664.6
(22) Date of filing: 05.05.2011
(51) Int. Cl.: B05B 1/30, A01M 7/00, F04C 15/00, B05B 7/24, B05B 12/00, A01C 15/04, B05B 7/12

(54) **Blower/atomizer portable device**
Tragbare Gebläse-/Zerstäubungsvorrichtung
Dispositif portable de soufflante/atomiseur

(43) Date of publication of application: 12.11.2014
(62) Divisional of application: 11727315.1
(73) Proprietor: Cifarelli S.p.A., 27058 Voghera (Pavia) (IT)
(72) Inventor: Cifarelli, Roberto, 27058 Voghera (Pavia) (IT)
(74) Representative: Tarabbia, Luigi

(56) References cited:
- EP-A1- 1 886 613
- EP-A2- 2 248 594
- US-A1- 2002 067 995
- US-A1- 2009 008 473

## Description

The present invention relates to a portable agricultural device of the blower/atomizer type, usable for spreading agrotechnical substances (fertilisers, pesticides, seeds, corn and others).

It is known that blowers/atomizers generally used in agriculture are formed on the base of a framework carried on the shoulder/the back, on which a mechanical power generator (usually an internal combustion engine) is mainly placed, which power generator is connected to a flow-generating fan; the fan directs this flow to a flexible swingable pipeline into which the substance to be spread/atomized is introduced.

The substance to be spread/atomized is contained in a suitable tank, usually placed in the uppermost part of the device and is introduced into the swingable pipeline or tube at a point placed in the vicinity of an outlet orifice; the operating performances of the whole device (number of revolutions of the engine, air flowrate, amount of the substance to be mixed and others) are finally adjusted by the operator through suitable control means. An illustrative example of a blower/atomizer is shown in document US 2009/0008473.

While these types of devices are widely utilised, they have some drawbacks.

First of all the traditional modes of mixing the substance to be spread with the air flow contemplate the presence, in the swingable tube, of a "joint" the task of which is to adjust and mix the substance to be spread/atomized, introducing it into the air flow; this joint generally takes up a great part of the tube section therefore giving rise to turbulence and flow resistance in the flexible tube (compensation of these forces requiring a greater engine power which is therefore more expensive and at all events more demanding from the point of view of energy).

In addition, as it is necessary to intervene separately on the number of "engine revolutions" of the propulsion assembly and on the remaining operating parameters (mainly the flowrate resulting from the air or substance amount to be introduced and mixed into the air flow generated by the fan), the presence of a multiplicity of separated user controls is required, which will unavoidably give rise to an increase in the production costs and correlated reduction in the ergonomic features and user-friendliness.

It is also to be pointed out that generally the mechanical connection between propulsion assembly and pumping unit designed to cause movement of the substances to be introduced into the flow relies on mechanical couplings that therefore constitute a possible point of penetration for undesirable environmental elements such as dust and polluting agents; these foreign elements, on the one hand, can contaminate the air flow generated by the fan and, on the other hand, can erode and penetrate the propulsion assembly, causing reduced efficiency or failures/lockout of the propulsion assembly itself.

In the light of the above, the present invention aims at conceiving and making available a blower/atomizer device capable of solving the aforesaid drawbacks.

In particular, it is an aim of the present invention to conceive an atomizer envisaged and produced for ensuring high efficiency in terms of spreading, adjustment and mixing, optimising the features of the air flow and dispersion of the substance to be spread inside the flow itself.

Another aim of the invention is to implement better ergonomic features and easier use of a portable atomizer.

Finally, the present invention aims at greatly improving reliability and the functional couplings of the atomizer components, thus obtaining better and longer operating lifetime.

The foregoing and further aims are achieved by the blower/atomizer according to the present invention, described hereinafter in an exemplary form thereof and claimed in the following, being illustrated in the accompanying drawings, in which:
- Fig. 1 is a longitudinal section view of a first functional assembly of the device;
- Fig. 2 is a longitudinal section view of the functional assembly in Fig. 1 taken along a plane at 90° relative to the section plane in Fig. 1;
- Fig. 3 is a cross-sectional view of the functional assembly in Fig. 1 taken along line III-III;
- Fig. 4 is a front view of the functional assembly in Fig. 1;

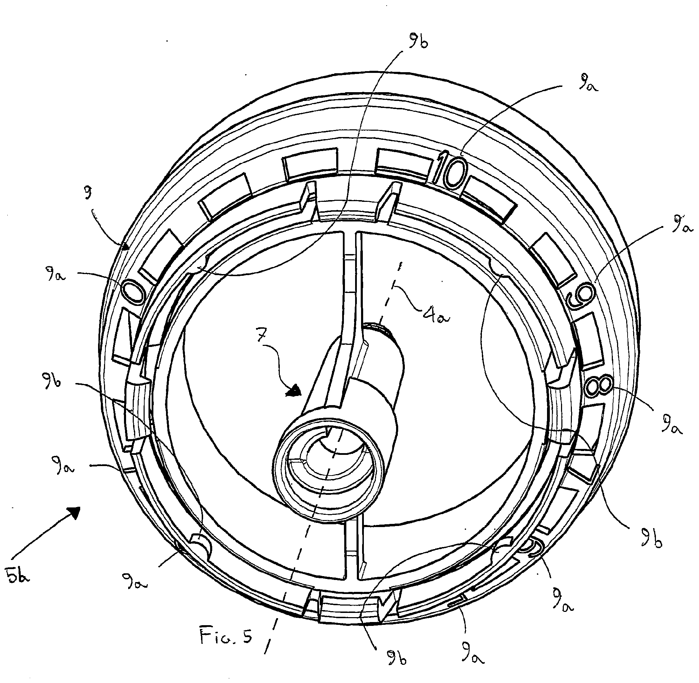

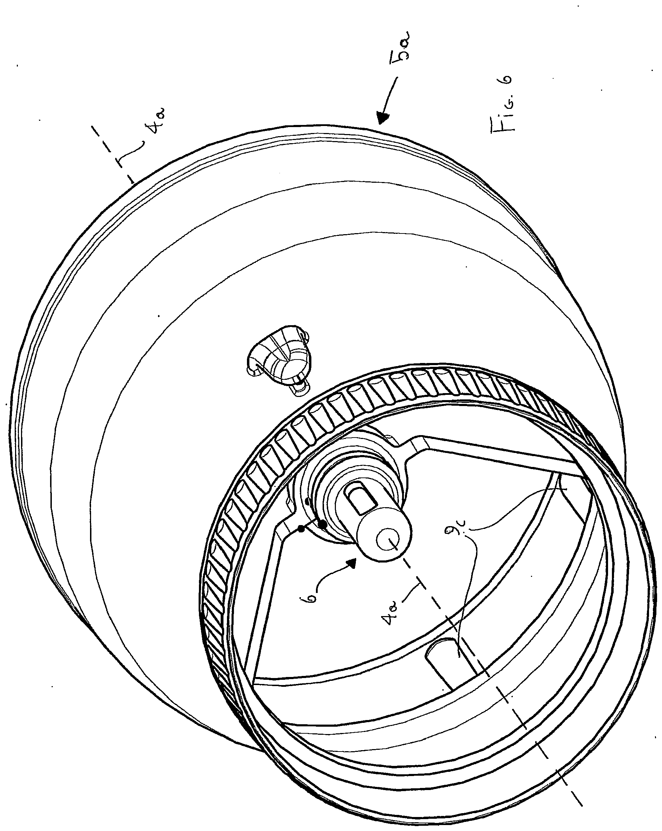

- Figs. 5 and 6 show respective perspective views of two components of the functional assembly of Fig. 1;

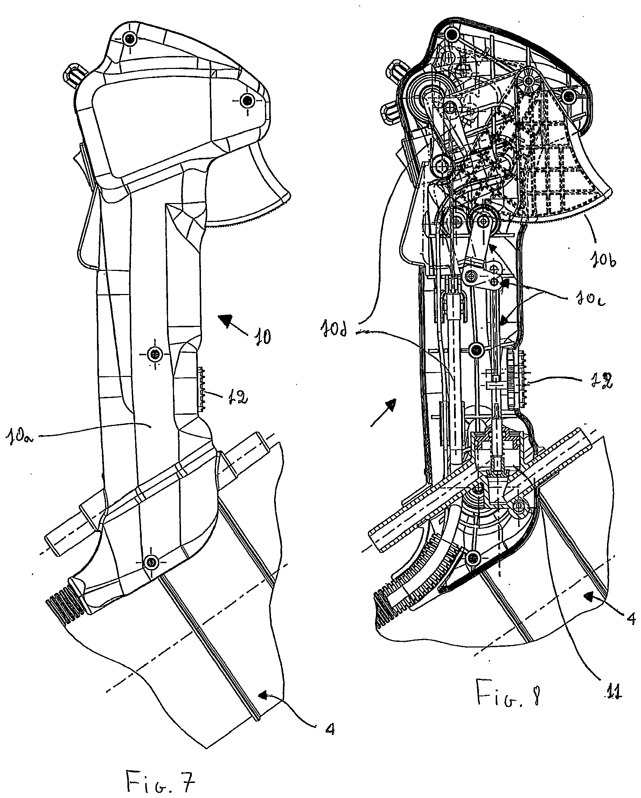

- Fig. 7 is a side view of a second functional assembly of the device;
- Fig. 8 is a sectional view of the second functional assembly seen in Fig. 7; and

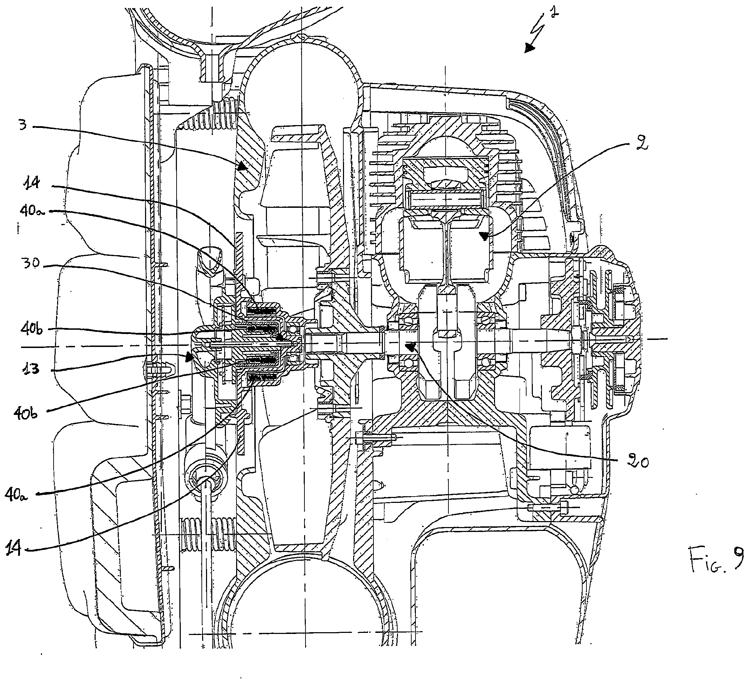

- Fig. 9 is a sectional view of the device according to the invention, in which the structural relationship between other functional assemblies or units of the device itself is highlighted.

With reference to the above, the blower/atomizer device is generally denoted by reference numeral 1 (in the drawings) and substantially comprises the following functional base components:
- a propulsion assembly or power unit 2, adapted to generate a mechanical power (which in turn is employed for operating the other functional assemblies or units listed herebelow);
- a blowing assembly 3 connected to the propulsion assembly 2 and adapted to energise and convey an air flow (through a fan enclosed in a suitable inner compartment, for example);
- a flexible swingable dispenser 4 (to be obtained using a flexible and/or articulated pipeline or tube, for example) defining a median axis 4a and adapted to emit and direct a flow that in turn is set in motion by the blowing assembly 3 along said median axis 4a; and
- an adjusting assembly 5 operatively acting in the flexible dispenser 4 for selectively introducing a predetermined amount of substance "S" to be distributed/atomized into the aforesaid flow,
the present device also optionally including a pumping unit 13 to be described in greater detail in the following, for better functional integration and operating flexibility.

The adjusting assembly 5 is coaxially mounted to the flexible dispenser 4 and comprises an inserting member 5a to be selectively configured according to a multiplicity of dispensing conditions by corresponding rotations of the inserting member 5a itself around the median axis 4a.

The described (and hereinafter claimed) structure has many differences as compared with the adjusting assemblies of known type that generally, as seen, "enter" the flexible tube "perpendicularly" by means of adjusting mechanisms disposed at right angles to the median axis 4a (which mechanisms consequently involve great bulkiness in section and represent an important source of turbulence/flow resistance); unlike the devices of known type, the mechanism of the present invention has a great compactness as regards the taken-up cross-section of the swingable tube and is of very simple construction.

In more detail, it is possible to see that the adjusting assembly 5 further comprises a control element 5b which is externally fitted (in coaxial manner, for example) to the swingable dispenser 4; this control element 5b can rotate around the median axis 4a so as to determine a plurality of flowrates of the substance "S" introduced into the flow.

Substance "S" introduced into the swingable tube comes from a holding tank; to this aim, device 1 further comprises conveying means 4c (slender pipelines, preferably flexible or articulated, for example) adapted to connect said holding tank to the inserting member 5a. Always for the purpose of minimising the space taken up in the cross section of the swingable dispenser/tube, the conveying means 4c extends in the axial direction in the swingable dispenser 4 at least in the vicinity of the inserting member 5a so that said means will be in alignment with the flow as much as possible thereby minimising their contribution in creating turbulence or flow resistance.

Still for the purpose of maximising compactness and giving the greatest functional character to the invention, the inserting member 5a and control element 5b are mutually connected in a coaxial manner along the median axis 4a at least through a first engagement portion 6 and a second engagement portion 7; these two engagement portions at least partly penetrate into each other and in cooperation define an adjusting channel 8 (that is clearly connected without a break to the swingable dispenser, at least in terms of flow passage), extending parallel to/in coaxial relationship with the median axis 4a.

From the geometric point of view, the adjusting channel 8 comprises an inlet end 8a (connected to the holding tank or more generally adapted to receive the aforesaid conveying means), an inserting end 8b opposite to the inlet end 8a and opening into the swingable dispenser 4, and finally an adjustable central section/portion 8c included between the inlet end 8a and inserting end 8b.

With reference to the above described geometry, it should be noted that the engagement portions 6 and 7 can rotate relative to each other and comprise section-varying means for varying a passage cross-section of the adjusting channel 8; this section-varying means is integrally formed in the first and/or the second engagement portions and is also adapted to vary a passage port in the adjustable central section 8c. Conveniently, variation in the passage port can be such

accomplished that it is proportional to the multiplicity of dispensing conditions (and consequently having different adjustment/mixing degrees for substance "S").

In other words the section-varying means for varying the passage cross-section comprises a passage port formed in the first engagement portion 6 (as shown in the drawings), which passage port is adapted to connect the inlet end 8a to the second engagement portion 7.

A necking-down element is present and is in functional cooperation with the aforesaid passage port; it is placed internally of the second engagement portion 7 and is also brought into fluid communication with said passage port 8d.

The necking-down element, due to a suitable geometric configuration (in the drawings it is in the form of an inclined helical surface extending coaxially with the adjusting channel 8, for example), is adapted to define said cross-section variation of the adjustable central portion 8c, by virtue of the relative rotations between the engagement portions 6 and 7 causing a change in the overall passage surface and/or the inner volumes of the adjustable central portion/section of the adjusting channel 8 itself.

To enable the user/operator to accurately quantify the mixture formed by substance "S" with the flow in the swingable tube, measuring and selecting means 9 can be present; said means is designed to determine variable intermediate flowrates between a minimum (or zero) flowrate and a maximum flowrate of substance "S".

The measuring and selecting means 9 is formed externally of the inserting member 5a or on the control element 5b and is adapted to determine a plurality of predetermined relative rotations between the inserting member 5a and the control element 5b; this plurality of predetermined relative rotations will correspond, depending on the related rotation angle, to predetermined adjustment percentages between the flow and substance "S".

From the structural point of view, the measuring and selecting means 9 shown in the figures first of all comprises:
- a perimetral ring nut 9a which is integrally formed on an outer face of the inserting member 5a (but alternatively, it can be formed on an outer face of the control element 5b) and has a circumferential numerical reference scale;
- a plurality of snap bodies 9b positioned in correlation with numerical values (generally discrete values) of the numerical reference scale; and
- a plurality of fitting seats 9c positioned in the control element 5b (or alternatively in the inserting member 5a) and adapted to receive at least one of the snap bodies 9b in reversible engagement.

Due to the aforesaid components, the user/operator of the device is able to determine different adjusting condition for introduction of substance "S" into the flow; this determination takes place very quickly, in a precise manner and without imposing long and strong turbulence transients to the outgoing flow and, above all, it takes place by directly acting manually on outer surfaces/faces of the device according to the invention.

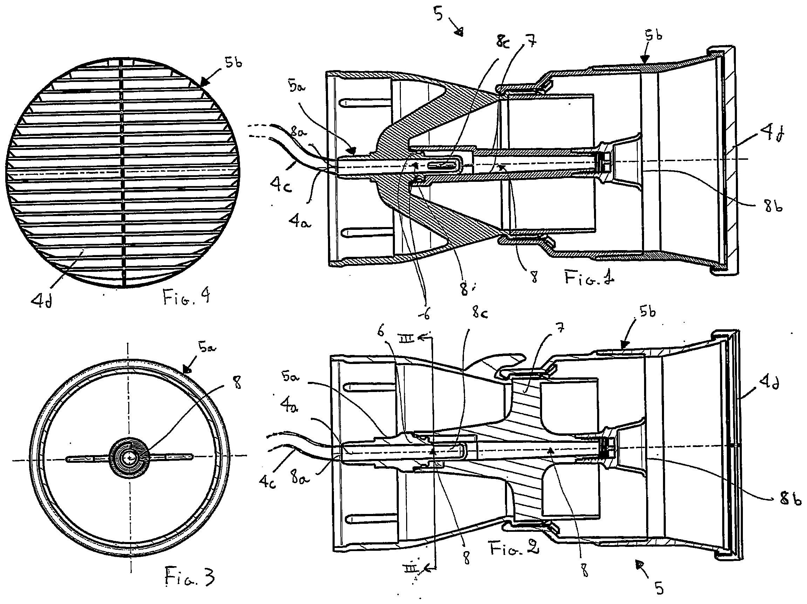

Conveniently, the position of the adjusting assembly 5 relative to the swingable dispenser 4 can be selected in such a manner as to maximise the ergonomic feature or minimise the flow-perturbation effect; for instance, the adjusting assembly 5 can be positioned at a final (or "distal") end of the swingable dispenser 4. Also note that element 5b can be equipped with suitable flow subdivision means placed at an outlet orifice thereof, such as the slit-like opening 4d visible in Figs. 1, 2 and 4.

The device 1 may further comprise synchronised actuating means 10 simultaneously acting on:
- the swingable dispenser 4 so as to vary a flowrate thereof; and
- the propulsion assembly 2 so as to vary delivery of mechanical power.

In fact, while in known devices the two above listed operating parameters are operated by respective separated user interfaces, in this invention a single control means is efficiently and originally provided, which control means can ensure halving of the control operations required from the user/operator and simultaneously a perfect agreement of the functional parameters with the different possible use conditions.

Conveniently, the synchronised actuating means 10 comprises a handgrip or handle 10a to be grasped by a user/operator; this handle 10a can be connected to the swingable dispenser 4 and in turn comprises an actuating slider 10b (e.g. a trigger to be pressed and movable between an operating-minimum condition and a maximum use condition), a first kinematic actuating mechanism 10c operatively connected to the actuating slider 10b and a second kinematic actuating mechanism 10d operatively connected to the actuating slider 10b.

Also present is flow adjusting means, which is interlocked with the first kinematic actuating mechanism 10c (and for example comprises a valve element 11 adapted to adjust the pressure and/or flowrate linked to the corresponding values of the flow itself), while provision is made for adjusting means for the propulsion assembly 2, which means is in functional coordination with (but substantially in direct structural independence of) said flow adjusting means, being on the contrary interlocked with the second kinematic actuating mechanism 10d (for instance, the adjusting means for the propulsion assembly or power unit 2 comprises an element adapted to adjust a rotation speed of said assembly 2).

Due to the presence of the synchronised actuating means, the device also reaches an important operative-safety factor; in fact, should a loss of grip or direct manual control/contact between operator and handle, release of the "control trigger" involves simultaneous closure both of the control means regulating power of the propulsion assembly and the control means regulating introduction of the flow; therefore operation of device 1 stops in a spontaneous and very quick manner, thus preventing the substances from being spread in an undesirable manner.

In order to enable the most accurate adjustments to be carried out under particular operating conditions, an additional control device 12 can be present which is adapted to adjust at least one minimum-flowrate condition of the flow; with reference to the drawings, this additional control device is operatively connected to the first kinematic actuating mechanism 10c alone and preferably comprises an adjustable element consisting of a disc or a wheel adapted to determine a plurality of configurations of the flow adjusting means (for instance different rotations of the wheel shown in the figures correspond to different "idling" positions of the slider of the underlying adjusting valve, so that different minimum-flowrate conditions are determined).

According to the present invention (that can be put into practice on blowers/atomizers that can also be devoid of the above described features), the present device is advantageously provided (if a pumping unit 13 is present which is driven by the power unit 2 and is adapted to cause movement of a substance to be atomized) with contactless transmission means acting between the power unit 2, blowing assembly 3 and pumping unit 13.

The aforesaid contactless transmission means is therefore adapted to actuate at least the pumping unit 13 maintaining a pneumatic and/or hydraulic separation relative to the propulsion assembly 2 and/or the blowing assembly 3, so that entry of corrosive or wear-causing substances is avoided in that part of the device that specifically has not to energise and convey the substances to be atomized/spread (or also in order to avoid transfers in the opposite direction, for example of gases resulting from combustion in the power unit or of various lubricants/mechanical additives).

From a structural point of view, the contactless transmission means can operate on/between an output shaft 20 (operatively connected to the propulsive assembly 2, for instance connected to a crank and connecting rod system of a reciprocating engine) and a fitting shaft 30 (operatively connected to at least the pumping unit 13).

In greater detail, the output shaft 20 has a first end emerging from the propulsion assembly 2 (and turned towards the blowing assembly 3), while the fitting shaft 30 has a second end facing the aforesaid first end of the output shaft; advantageously, the contactless transmission means comprises a magnetic driving element 40a mounted on the first end of the output shaft 20 and a corresponding magnetic driven element 40b mounted on the second end of the fitting shaft 30.

The two magnetic elements "face" each other so as to create a magnetic attraction at least in a rotation direction of the output shaft 20 under operating conditions.

According to the present invention, the magnetic driving element 40a and the magnetic driven element 40b have a toroidal conformation and are disposed in mutual coaxial and concentric relationship; in this manner it is possible to maximise the compactness and axial symmetry of the transmission coupling that is defined by the contactless transmission means.

For carrying out the necessary separation/tightness between the different operating volumes, also present is volumetric isolation means interposed at least between the pumping unit 13 and the propulsion assembly 2 (or also interposed, depending on particular requirements, between the blowing assembly 3 and the aforesaid two other functional assemblies) at least at the first end of the output shaft 20 and the second end of the fitting shaft 30; this volumetric isolation means for instance comprises a fastening and separation plate placed between the pumping unit 13 and an inner compartment for housing a fan (belonging, as already said, to the blowing assembly 3, and adapted to be advantageously rigidly mounted to the output shaft 20).

Due to the particular functional character of the contactless transmission means described above (and hereinafter claimed) it is further possible to provide the present invention with a another innovative and original operability: actually, the presence of friction coupling means operatively interposed between the pumping unit 13 and propulsion assembly 2 can be implemented; this friction coupling means can advantageously comprise and even be coincident with the magnetic driving means 40a and the magnetic driven means 40b.

From the operating point of view, the lack of contact and the magnetic driving effect can allow, on arising of particular conditions (e.g. an anomaly due to clogging/seizing of the pumping unit 13), "dissipation" of the torsional strength that is created, for overcoming the magnetic attraction, so that this force is not discharged on the output shaft or the fitting shaft and consequently no dangerous effects occur on the device parts that have not been directly submitted to arising of the anomaly.

The particular construction architecture of the adjusting portion allows an air flow with minimum disturbance to be obtained as well as an accurate and quick introduction of the substance "S", without obstructions or requirement of adjusting members of great bulkiness; this also results in an improved manoeuvring of the swingable tube that is made lighter in its end portion and is also simplified in terms of inner and outer bulkiness.

Integration of the control means for the number of revolutions of the engine and for adjustment of the air flowrate enables a very precise and easily adjustable synchronism and proportionality to be established through a single user interface; this advantageously affects ease of use and operator's comfort.

In the present invention the particular interconnecting mode between the engine shaft and the fan hub ensures the possibility of transferring motion while maintaining an almost complete isolation in terms of infiltration of gas, liquid or foreign substances both into the power unit compartment and the fan housing compartment, which is advantageous for maintaining the best operating conditions.

It is finally to be pointed out that the present invention offers important improvements within the considered technical system, without involving unfavourable increases in costs or production complexity.

## Claims

1. A blower/atomizer device, preferably of the portable type, comprising:
- a propulsion assembly or power unit (2), adapted to generate a mechanical power;
- a blowing assembly (3) connected to said propulsion assembly (2) and adapted to energise and convey an air flow
- a flexible swingable dispenser (4) defining a median axis (4a) and adapted to emit and direct a flow set in motion by the blowing assembly (3) along said median axis (4a); and
- an adjusting assembly (5) operatively acting in said swingable dispenser (4) for selectively introducing a predetermined amount of substance "S" to be distributed/atomized, into said flow,
wherein it further comprises:
- a pumping unit (13) operated by the power unit (2) and adapted to cause movement of a substance to be distributed/atomized; and
- contactless transmission means acting between the power unit or propulsion assembly (2), the blowing assembly (3) and said pumping unit (13) and adapted to actuate at least the pumping unit (13) while maintaining a pneumatic and/or hydraulic separation relative to the power unit (2) and/or the blowing assembly (13),
wherein said contactless transmission means comprises:
- an output shaft (20) operatively connected to the power unit (2) and preferably connected to a crank and connecting rod system of a reciprocating engine, said output shaft (20) having a first end emerging from the power unit (2) in the direction of the blowing assembly (3);
- a fitting shaft (30) operatively connected at least to the pumping unit (13), said fitting shaft having a second end facing said first end;
- a magnetic driving element (40a) mounted on the first end of the output shaft (20); and
- a magnetic driven element (40b) mounted on said second end of the fitting shaft (30) and facing the magnetic driving element (40a) in such a manner as to create a magnetic attraction at least in one rotation direction of the output shaft (20) under operating conditions,
**characterised in that** said magnetic driving element (40a) and magnetic driven element (40b) have toroidal conformation and are disposed in coaxial and concentric relationship with each other.

2. A device as claimed in anyone of the preceding claims, wherein also present is volumetric isolations means (14) interposed between the power unit (20) and the blowing assembly (3) at least at said first end of the output shaft (20) and said second end of the fitting shaft (30), said volumetric isolation means (14) preferably comprising a fastening and separation plate placed between the pumping unit (13) and an inner compartment for housing a fan, said inner housing compartment and said fan being included in the blowing unit (3).

3. A device preferably as claimed in anyone of the preceding claims, wherein also present is friction coupling means operatively interposed between the pumping unit (13) and the power unit (2), said friction coupling means preferably including at least the magnetic driving element (40a) and the magnetic driven element (40b).

## Patentansprüche

1. Gebläse-/Zerstäubungsvorrichtung, vorzugsweise vom tragbaren Typ, umfassend:
- eine Antriebsanordnung oder Antriebseinheit (2), die ausgelegt ist, um eine mechanische Kraft zu erzeugen;
- eine Blasanordnung (3), die mit der Antriebsanordnung (2) verbunden und ausgelegt ist, um einem Luftstrom Energie zuzuführen und diesen zu fördern;
- eine flexible schwingbare Ausgabe (4), definierend eine mittlere Achse (4a) und ausgelegt, um einen Strom auszugeben und zu lenken, in Bewegung versetzt von der Blasanordnung (3) entlang der mittleren Achse (4a), und
- eine Einstellanordnung (5), die betriebswirksam auf die schwingbare Ausgabe (4) wirkt, um selektiv eine vorgegebene Menge einer zu verteilenden/zerstäubenden Substanz "S" in den Strom einzuführen,
wobei sie zudem umfasst:
- eine Pumpeinheit (13), die von der Antriebseinheit (2) betätigt wird und ausgelegt ist, um die Bewegung einer zu verteilenden/zerstäubenden Substanz zu bewirken, und
- kontaktlose Übertragungsmittel, die zwischen der Antriebseinheit oder Antriebsanordnung (2), der Blasanordnung (3) und der Pumpeinheit (13) wirken und ausgelegt sind, um zumindest die Pumpeinheit (13) zu betätigen, während eine pneumatische und/oder hydraulische Trennung relativ zur Antriebseinheit (2) und/oder zur Blasanordnung (13) aufrechterhalten wird, wobei die kontaktlosen Übertragungsmittel umfassen:
- eine Abtriebswelle (20), die betriebswirksam mit der Antriebseinheit (2) verbunden und vorzugsweise mit einer Kurbelwelle und einem Verbindungsstangensystem eines Kolbenmotors verbunden ist, wobei die Abtriebswelle (20) ein erstes Ende aufweist, das aus der Antriebseinheit (2) in Richtung der Blasanordnung (3) hervortritt;
- eine Befestigungswelle (30), die betriebswirksam mindestens mit der Pumpeinheit (13) verbunden ist, wobei die Befestigungswelle ein zweites Ende aufweist, das dem ersten Ende zugewandt ist;
- ein Magnetantriebselement (40a), das am ersten Ende der Abtriebswelle (20) montiert ist, und
- ein angetriebenes Magnetelement (40b), das am zweiten Ende der Befestigungswelle (30) montiert und dem Magnetantriebselement (40a) zugewandt ist, sodass eine magnetische Anziehung zumindest in einer Drehrichtung der Abtriebswelle (20) unter Betriebsbedingungen erzeugt wird,
**dadurch gekennzeichnet, dass** das Magnetantriebselement (40a) und das angetriebene Magnetelement (40b) kreisringförmig ausgebildet und in einer koaxialen und konzentrischen Beziehung zueinander angeordnet sind.

2. Vorrichtung nach einem der vorhergehenden Ansprüche, wobei auch volumetrische Isoliermittel (14) bereitgestellt sind, die zwischen der Antriebseinheit (20) und der Blasanordnung (3) zumindest am ersten Ende der Abtriebswelle (20) und dem zweiten Ende der Befestigungswelle (30) eingesetzt sind, wobei die volumetrischen Isoliermittel (14) vorzugsweise eine Befestigungs- und Trennplatte umfassen, die zwischen der Pumpeinheit (13) und einer inneren Unterteilung zur Aufnahme eines Lüfters platziert sind, wobei die innere Aufnahmeunterteilung und der Lüfter in der Blaseinheit (3) eingeschlossen sind.

3. Vorrichtung vorzugsweise nach einem der vorhergehenden Ansprüche, wobei auch Reibungskupplungsmittel bereitgestellt sind, die betriebswirksam zwischen der Pumpeinheit (13) und der Antriebseinheit (2) eingesetzt sind, wobei die Reibungskupplungsmittel vorzugsweise mindestens das Magnetantriebselement (40a) und das magnetische angetriebene Element (40b) einschließen.

## Revendications

1. Dispositif de soufflante/atomiseur, de préférence du type portable, comprenant :
- un ensemble à propulsion ou bloc d'alimentation (2) adapté pour générer une puissance mécanique ;
- un ensemble de soufflage (3) relié au dit ensemble à propulsion (2) et adapté pour stimuler et acheminer un flux d'air ;
- un distributeur orientable flexible (4) définissant un axe médian (4a) et adapté pour émettre et orienter un flux mis en mouvement par l'ensemble de soufflage (3) le long dudit axe médian (4a) ; et
- un ensemble de réglage (5) agissant fonctionnellement dans ledit distributeur orientable (4) pour introduire de façon sélective une quantité prédéterminée de substance « S » à distribuer/atomiser dans ledit flux, dans lequel il comprend de plus :
- une unité de pompage (13) actionnée par le bloc d'alimentation (2) et adaptée pour provoquer le mouvement d'une substance à distribuer/atomiser ; et
- des moyens de transmission sans contact agissant entre le bloc d'alimentation ou l'ensemble à propulsion (2), l'ensemble de soufflage (3) et ladite unité de pompage (13) et adaptés pour actionner au moins l'unité de pompage (13) tout en conservant une séparation pneumatique et/ou hydraulique par rapport au bloc d'alimentation (2) et/ou à l'ensemble de soufflage (13), dans lequel lesdits moyens de transmission sans contact comprennent :
- un arbre de sortie (20) fonctionnellement relié au bloc d'alimentation (2) et, de préférence, relié à un système de vilebrequin et de tige de raccordement d'un moteur alternatif, ledit arbre de sortie (20) comportant une première extrémité émergeant du bloc d'alimentation (2) dans la direction de l'ensemble de soufflage (3) ;
- un arbre d'ajustage (30) fonctionnellement relié au moins à l'unité de pompage (13), ledit arbre d'ajustage comportant une seconde extrémité faisant face à ladite première extrémité ;
- un élément d'entraînement magnétique (40a) monté sur la première extrémité de l'arbre de sortie (20) ; et
- un élément magnétique entraîné (40b) monté sur ladite seconde extrémité de l'arbre d'ajustage (30) et faisant face à l'élément d'entraînement magnétique (40a) de manière à créer une attraction magnétique au moins dans une direction de rotation de l'arbre de sortie (20) dans des conditions de fonctionnement,
**caractérisé en ce que** lesdits élément d'entraînement magnétique (40a) et élément magnétique entraîné (40b) ont une forme toroïdale et sont disposés en relation coaxiale et concentrique réciproquement.

2. Dispositif selon l'une quelconque des revendications précédentes, dans lequel se trouvent aussi des moyens d'isolation volumétrique (14) interposés entre le bloc d'alimentation (20) et l'ensemble de soufflage (3) au moins en correspondance de ladite première extrémité de l'arbre de sortie (20) et de ladite seconde extrémité de l'arbre d'ajustage (30), lesdits moyens d'isolation volumétrique (14) comprenant, de préférence, une plaque de fixation et de séparation placée entre l'unité de pompage (13) et un compartiment interne pour loger un ventilateur, ledit compartiment de logement interne et ledit ventilateur étant inclus dans l'unité de soufflage (3).

3. Dispositif, de préférence, selon l'une quelconque des revendications précédentes, dans lequel se trouvent aussi des moyens d'accouplement à friction fonctionnellement interposés entre l'unité de pompage (13) et le bloc d'alimentation (2), lesdits moyens d'accouplement à friction incluant, de préférence, au moins l'élément d'entraînement magnétique (40a) et l'élément magnétique entraîné (40b).
